(19) **Europäisches Patentamt / European Patent Office / Office européen des brevets**

(11) **EP 4 306 574 B1**

(12) **EUROPEAN PATENT SPECIFICATION**

(45) Date of publication and mention of the grant of the patent:
**21.01.2026   Bulletin 2026/04**

(21) Application number: **22816160.0**

(22) Date of filing: **01.06.2022**

(51) International Patent Classification (IPC):
**C08J 3/12** *(2006.01)*      **C08K 9/04** *(2006.01)*

(52) Cooperative Patent Classification (CPC):
**C08J 5/045; C08L 1/02;** C08J 2307/00;
Y02W 30/62

(86) International application number:
**PCT/JP2022/022374**

(87) International publication number:
**WO 2022/255415 (08.12.2022 Gazette 2022/49)**

(54) **COMPOSITE POWDER AND METHOD FOR MANUFACTURING SAME**

VERBUNDPULVER UND VERFAHREN ZUR HERSTELLUNG DAVON

POUDRE COMPOSITE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **03.06.2021   JP 2021093648**

(43) Date of publication of application:
**17.01.2024   Bulletin 2024/03**

(73) Proprietors:
- **Mizuno Corporation**
  **Osaka-shi, Osaka 541-8538 (JP)**
- **Mizuno Technics Corporation**
  **Gifu 503-1314 (JP)**
- **The University of Tokyo**
  **Bunkyo-ku, Tokyo 113-8654 (JP)**

(72) Inventors:
- **FUJIKAWA, Yoshihiro**
  **Osaka-shi, Osaka 559-8510 (JP)**
- **NAKA, Yuri**
  **Osaka-shi, Osaka 559-8510 (JP)**
- **MATSUI, Yasushi**
  **Yoro-gun, Gifu 503-1314 (JP)**
- **SAKATA, Ichiro**
  **Tokyo 113-8654 (JP)**
- **FUGETSU, Bunshi**
  **Tokyo 113-8654 (JP)**
- **UEKI, Takayuki**
  **Tokyo 113-8654 (JP)**

(74) Representative: **advotec.**
**Patent- und Rechtsanwaltspartnerschaft mbB**
**Widenmayerstraße 4**
**80538 München (DE)**

(56) References cited:
| | |
|---|---|
| EP-A1- 3 663 363 | EP-A1- 4 212 242 |
| WO-A1-2018/043246 | JP-A- 2013 188 864 |
| JP-A- 2017 186 187 | JP-A- 2018 039 897 |
| JP-A- 2019 026 782 | JP-A- 2019 081 257 |
| JP-A- 2019 183 109 | JP-A- 2020 066 699 |

**Description**

BACKGROUND

The present invention relates to a composite powder for use in rubber, resin, or carbon fiber-reinforced plastic (hereinafter sometimes referred to as "CFRP") and a method for manufacturing the composite powder.

BACKGROUND ART

Since sporting goods always require "lighter and stronger materials," many products are manufactured using carbon fiber-reinforced plastics. For example, there is a great need, and also high potential demand, for CFRP having high impact resistance in products such as golf shafts and badminton rackets. Intensive research is therefore conducted on, for example, the modification of a matrix resin and the addition of a filler having excellent strength.

CFRP is light and has high strength. However, since its base material is a resin having low impact strength, CFRP does not have enough impact strength in practical use. As a countermeasure for this, an increase in the impact strength of CFRP by mixing cellulose nanofibers (hereinafter sometimes referred to as "CNFs") in a matrix resin has been investigated as a method for increasing the impact strength of CFRP.

"Stronger materials" are also sought for rubber and resin, which are used for many products, such as the outsole and the midsole of shoes, and golf balls. In a case of rubber, reinforcement with carbon black is particularly known for enhancement in wear resistance and mechanical strength, and an inorganic filler such as silica is also widely and commonly used as a reinforcement material. It is known that rubber and resin are typically organic substances, and that a silane coupling agent is widely used to increase an interaction with silica, which is an inorganic substance, and further improve the reinforcement effect.

Adding a smaller amount of cellulose nanofibers as an alternative material in place of the carbon black and silica is widely investigated to achieve the same or higher reinforcement effect. However, the cellulose nanofibers cannot be easily dispersed in rubber or resin as they are since the cellulose nanofibers are compatible with water. In a known example, an attempt is made to obtain a mixture of rubber or resin and cellulose nanofibers by mixing an aqueous solution of cellulose nanofibers in the rubber or resin in a latex state and removing/drying water thereafter. However, the rubber and resin in this method are restricted to those available in a latex state, which is a restriction of a material and is a demerit in terms of application to various products. Another process is also proposed in which resin pellets and hydrophobized pulp as a raw material of cellulose nanofibers are mixed together in advance, and the pulp is subjected to fibrillation into nanofibers using a shear force generated during kneading with a twin-screw extruder or the like, thereby obtaining a mixture. In this case, a selectable matrix is a thermoplastic resin, and the problem is that the melting point of the thermoplastic resin is restricted to a temperature equal to or lower than the decomposition temperature of the cellulose in consideration of the decomposition temperature of the cellulose.

In view of the above, there is eager demand for a filler of a cellulose nanofiber that can be, in a dry state, mixed and dispersed easily in rubber or resin, like carbon black or silica.

Specifically, a cellulose nanofiber-supporting inorganic powder containing cellulose nanofibers and an inorganic powder, such as silica, has been proposed in which the cellulose nanofibers are supported on the inorganic powder. It is described (for example, see Patent Document 1) that use of the cellulose nanofiber-supporting inorganic powder allows uniform dispersion of the cellulose nanofibers in a resin or rubber composition, thereby making it possible to improve the physical characteristics of the resin or the rubber. Patent Document 2 provides a cellulose nanofiber-supporting inorganic powder (silica, alumina, titanium dioxide, aluminum hydroxide, calcium carbonate, zinc carbonate, iron oxide) that includes a cellulose nanofiber and an inorganic powder, and the cellulose nanofiber is supported on the inorganic powder.

Patent Document D3 provides a cellulose nanofiber-supporting inorganic powder including diatomaceous earth.

CITATION LIST

PATENT DOCUMENT

Patent Document 1: Japanese Unexamined Patent Application No. 2019-26782
Patent Document 2: European Patent Application No. EP 3 663 363 A1Patent Document 3: European Patent Application No. EP 4 212 242 A1

SUMMARY OF THE INVENTION

TECHNICAL PROBLEM

The cellulose nanofiber-supporting inorganic powder described in Patent Document 1 is obtained by mixing fine silica (fumed silica) and a dispersion liquid, which is an aqueous solvent with cellulose nanofibers dispersed therein, and by evaporating the aqueous solvent from the mixture, followed by drying. In the thus obtained powder, the cellulose nanofibers are supported on the silica by adhering to the surface of the silica, which may cause the aggregation of the cellulose nanofibers on the surface of the silica and may make the powder more likely to adhere to a container during drying. This means that even when such a cellulose nanofiber-supporting inorganic powder is mixed in a resin or rubber composition, it is difficult to uniformly disperse the cellulose nanofibers. It is thus difficult to increase the strength of CFRP, the rubber, and the resin sufficiently.

In view of the foregoing, it is an object of the present invention to provide a composite powder that allows uniform dispersion of cellulose nanofibers in a resin or rubber composition and can reliably increase the strength of CFRP, rubber, and resin, and a method for manufacturing the composite powder.

SOLUTION TO THE PROBLEM

In order to achieve the object, a method for manufacturing a composite powder of the present invention is a method for manufacturing a composite powder containing cellulose nanofibers and a silicon-based porous material, the method includes: preparing a dispersion liquid by mixing the silicon-based porous material into an aqueous solvent in which the cellulose nanofibers are dispersed; producing a dried material containing the cellulose nanofibers and the silicon-based porous material by drying the dispersion liquid; and producing a composite powder by grinding the dried material. A content ratio of the cellulose nanofibers and the silicon-based porous material in the dispersion liquid is cellulose nanofibers : silicon-based porous material = 1:5 to 1:20 on a mass basis, and a relationship of the following expression (1) is satisfied, where X (in parts by mass) is a content of the silicon-based porous material relative to 1 part by mass of the cellulose nanofibers contained in the dispersion liquid and Y (in % by mass) is a concentration of the cellulose nanofibers in the aqueous solvent.
[Math. 1]

$$Y \leq -0.048X + 1.96 \ (1)$$

A composite powder of the present invention is a composite powder containing cellulose nanofibers and a silicon-based porous material. A content ratio of the cellulose nanofibers and the silicon-based porous material is cellulose nanofibers : silicon-based porous material = 1:5 to 1:20 on a mass basis, and the cellulose nanofibers at least adhere to a surface of the silicon-based porous material or are inserted in pores of the silicon-based porous material.

ADVANTAGES OF THE INVENTION

According to the present invention, it is possible to prevent adhering of the powder to a container due to aggregation of the cellulose nanofibers, and possible to disperse the cellulose nanofibers uniformly in the resin or rubber composition. Thus, the strength of CFRP, the rubber, and the resin can be increased reliably.

BRIEF DESCRIPTION OF THE DRAWINGS

FIG. 1 is a graph of a relationship between a content X (in parts by mass) of a silicon-based porous material contained in a dispersion liquid and a concentration Y (in % by mass) of the cellulose nanofibers.
FIG. 2 is a scanning electron microscope (SEM) photograph showing a state of a composite powder of Example 1.
FIG. 3 is photographs showing a carbon atom derived from cellulose nanofibers in the composite powder of Example 1 by an energy dispersive X-ray spectroscopy (EDS).

DETAILED DESCRIPTION

A preferred embodiment of the present invention will now be described.
A composite powder of the present invention contains cellulose nanofibers and a silicon-based porous material. The composite powder is dispersed in a resin or rubber composition to be a base material of CFRP so that the strength of the CFRP, the rubber, and the resin be increased in terms of stretchability and elasticity.

<Cellulose Nanofibers>

The cellulose nanofibers are not particularly limited, and known cellulose nanofibers can be widely adopted. Plant-derived cellulose, animal-derived cellulose, or bacteria-derived cellulose can be used as cellulose forming the cellulose nanofibers. Among these, one type may be used alone, or two or more types may be used in combination.

As the plant-derived cellulose, for example, cellulose derived from hardwood (eucalyptus, populus, etc.), cellulose derived from softwood (pine, fir, cedar, cypress, etc.), cellulose derived from herbaceous plants (straw, bagasse, reed, kenaf, abaca, sisal, etc.), and seed hair fibers (cotton, etc.) can be used. Pulp as a raw material may be mechanical pulp obtained by mechanically processing wood chips, chemical pulp obtained by chemically removing a non-cellulose component from wood chips, or dissolving pulp obtained by removing a non-cellulose component, followed by purification.

Animal-derived cellulose such as ascidian, bacteria-derived cellulose such as nata de coco, or other types can also be used. Such cellulose does not necessarily have to consist of only a pure cellulose component and may include cellulose as a main component with a non-cellulose component associated therewith.

The main non-cellulose component associated with the cellulose nanofibers is not particularly limited and is selectable as appropriate according to applications. Examples thereof may include hemicellulose and lignin.

The ratio of the pure cellulose component in the cellulose nanofibers may also be set as appropriate according to applications. For example, the ratio of the pure cellulose component is preferably 70% by mass or more, and more preferably 80% by mass or more, relative to 100% by mass of the cellulose nanofibers. The upper limit of the ratio of the pure cellulose component can be 100% by mass.

The "ratio of cellulose" herein refers to the ratio of the pure cellulose component in which a $\beta$-glucose molecule is linearly polymerized by glycosidic linkage, relative to the mass of the whole cellulose nanofibers (100% by mass).

The degree of polymerization of the pure cellulose component contained in the cellulose nanofibers may be set as appropriate according to applications. For example, a cellulose component having a degree of polymerization of 500 or more, particularly 600 or more can be employed. The upper limit of the degree of polymerization of the cellulose component is not particularly limited and can be 100,000, for example.

The crystallinity of the pure cellulose component contained in the cellulose nanofibers is not particularly limited and is preferably 60% or more, more preferably 70% or more. The upper limit of the crystallinity of the cellulose is not particularly limited and can be 99%, for example. Examples of a crystal structure of the cellulose component include Type I, Type II, Type III and Type IV.

The size of the cellulose nanofibers is not particularly limited. The cellulose nanofibers preferably have an elongated shape having a high aspect ratio, a diameter preferably of 3 nm to 100 nm, and a length of 100 nm or more, preferably 5 $\mu$m or more, considering that such cellulose nanofibers form some type of network or structure in the rubber or resin and that the network or structure effectively has elasticity.

The "diameter of the cellulose nanofibers" herein refers to a median diameter obtained by observing 50 or more randomly extracted cellulose nanofibers, using a scanning electron microscope (SEM).

In order to facilitate dispersion in the resin or rubber, cellulose nanofibers in which a polar group, such as a carboxyl group, and a hydrophobic functional group are introduced by an oxidation process in the presence of 2,2,6,6-tetramethyl-1-piperidine-N-oxyl (TEMPO) as a catalyst (TEMPO-mediated oxidation process) can be employed as the cellulose nanofibers.

For example, pulp that is a fiber raw material, TEMPO that is a catalyst, sodium hypochlorite, sodium hypobromite, etc., are added to a sodium phosphate buffer solution to cause the above oxidation process, thereby making it possible to obtain cellulose nanofibers which are produced by chemical fibrillation and in which a carboxyl group is introduced.

A commercially available product, such as "CELLENPIA" manufactured by Nippon Paper Industries Co., Ltd. and "RHEOCRYSTA" manufactured by DKS Co. Ltd., (both in a slurry form), can be used as the cellulose nanofibers that have undergone fibrillation through the TEMPO-mediated oxidation.

Other available chemical fibrillation methods that are different from, but similar to, the TEMPO-mediated oxidation include, for example, phosphorylation and esterification of phosphorous acid. The present invention aims to provide a filler that is easily dispersed in the resin or rubber. Since in production of the filler, a starting material is an aqueous solution of the cellulose nanofibers, it is possible to use a commercially available aqueous dispersion or aqueous solution of cellulose nanofibers obtained by another fibrillation method (such as an aqueous counter collision method, a water jet method, and a mechanical fibrillation method using a grinder) different from the above-mentioned chemical fibrillation process.

<Silicon-Based Porous Material>

The silicon-based porous material has a large number of pores (porous body). In the present invention, diatomaceous earth or zeolite can be used as the silicon-based porous material. Among these, one type may be used alone, or two or more types may be used in combination.

The pore diameter of the pores of the silicon-based porous material is not particularly limited and is preferably 0.2 nm to 2,000 nm in order that the cellulose nanofibers can enter the pores easily. The shape of the pores of the silicon-based porous material is not particularly limited.

In the case of, for example, employing diatomaceous earth as the silicon-based porous material, the cellulose nanofibers are supported while being inserted in the pores of the diatomaceous earth. It is therefore possible to prevent adhering of the powder to a container due to aggregation of the cellulose nanofibers, unlike the known cellulose nanofiber-supporting inorganic powder in which the cellulose nanofibers adhere to the surface of silica. Furthermore, the cellulose nanofibers inserted in the pores of the diatomaceous earth can be dispersed uniformly in the resin or rubber composition. It is therefore possible to increase the strength of CFRP, the rubber, and the resin reliably.

In the case of, for example, employing as the silicon-based porous material, zeolite having a smaller pore diameter than the cellulose nanofibers, the cellulose nanofibers do not enter the pores of the zeolite, but the cellulose nanofibers are more likely to adhere to the surface of the zeolite because the specific surface area of zeolite is larger than the specific surface area of the diatomaceous earth. It is thus possible to disperse the cellulose nanofibers adhering to the surface of the zeolite in the resin or rubber composition uniformly, similarly to the case where the cellulose nanofibers enter the pores of the diatomaceous earth.

That is, according to the composite powder of the present invention, the cellulose nanofibers at least adhere to the surface of the silicon-based porous material or enter the pores of the silicon-based porous material, which allows the cellulose nanofibers to be dispersed uniformly in the resin or rubber composition. As a result, the strength of CFRP, the rubber, and the resin can be increased reliably.

According to the composite powder of the present invention, the content ratio of the cellulose nanofibers and the silicon-based porous material in the composite material is cellulose nanofibers : silicon-based porous material = 1:5 to 1:20 on the mass basis (i.e., the content of the silicon-based porous material is 5 parts by mass to 20 parts by mass relative to 1 part by mass of the cellulose nanofibers).

Next, a method for manufacturing the composite powder of the present invention will be described. The method for manufacturing the composite powder of the present invention includes preparing a dispersion liquid, producing a dried material by drying the dispersion liquid, and producing the composite powder by grinding the dried material.

(Dispersion Liquid Preparation Step)

First, a silicon-based porous material is mixed in an aqueous solvent in which the cellulose nanofibers are dispersed, thereby preparing a dispersion liquid.

The aqueous solvent (dispersion medium) herein is not particularly limited, and water (e.g., purified water) is employed. An alcohol, such as ethanol or isopropanol, may be added to water, if necessary.

The content of the cellulose nanofibers in the aqueous solvent is set such that a relationship of the following expression (2) is satisfied, where X (in parts by mass) is the content of the silicon-based porous material relative to 1 part by mass of the cellulose nanofibers contained in the dispersion liquid, and Y (in % by mass) is the concentration of the cellulose nanofibers.

[Math. 2]

$$Y \leq -0.048X + 1.96 \ (2)$$

This expression is set because if the concentration Y of the cellulose nanofibers is greater than the right side of the expression (2) (i.e., -0.048X + 1.96), a thickening effect of the cellulose nanofibers causes a rapid increase of the viscosity of the aqueous solvent in which the cellulose nanofibers are dispersed, making it difficult to cause sufficient stirring to mix the silicon-based porous material in the aqueous solvent in which the cellulose nanofibers are dispersed.

The expression (2) will now be described in further detail. The present inventors employed one type of cellulose nanofibers subjected to fibrillation under Tempo-mediated oxidation (represented by "Tempo oxidation fibrillation CNF" in Table 1) and two types of cellulose nanofibers subjected to mechanical fibrillation (represented by "Mechanical fibrillation CNF A" and "Mechanical fibrillation CNF B" in Table 1), and changed the content (in parts by mass) of the silicon-based porous material (diatomaceous earth) relative to 1 part by mass (in % by mass) of the cellulose nanofibers contained in a mixed aqueous solution (dispersion liquid) in a range between 0 part by mass and 20 parts by mass to measure the viscosity of the mixed aqueous solution. The viscosity of the mixed aqueous solution (the temperature of the mixed aqueous solution: 25°C) was measured using an RE80-type viscometer manufactured by Toki Sangyo Co., Ltd. Stirring properties were evaluated with a circle (∘) indicating that stirring of the mixed aqueous solution is possible and a cross (×) indicating that stirring of the mixed aqueous solution is impossible. Table 1 shows the results.

Table 1

| Type of CNF | Content of Diatomaceous Earth X (parts by mass) | Concentration of CNF Y (% by mass) | Stirring properties | Mixed aqueous solution viscosity (mPa·s) |
|---|---|---|---|---|
| Tempo-oxidation fibrillation CNF | 5 | 1.19 | ○ | 688 |
| Tempo-oxidation fibrillation CNF | 2 | 0.57 | ○ | 69 |
| Tempo-oxidation fibrillation CNF | 3 | 0.47 | ○ | 49 |
| Tempo-oxidation fibrillation CNF | 4 | 0.44 | ○ | 32 |
| Tempo-oxidation fibrillation CNF | 10 | 0.57 | ○ | 139 |
| Tempo-oxidation fibrillation CNF | 10 | 1.34 | ○ | 1495 |
| Tempo-oxidation fibrillation CNF | 15 | 1.13 | ○ | 1449 |
| Tempo-oxidation fibrillation CNF | 0 | 0.54 | ○ | 502 |
| Tempo-oxidation fibrillation CNF | 0 | 2.00 | × | 4128 |
| Tempo-oxidation fibrillation CNF | 0 | 1.50 | ○ | 1373 |
| Tempo-oxidation fibrillation CNF | 0 | 1.22 | ○ | 1371 |
| Tempo-oxidation fibrillation CNF | 0 | 0.81 | ○ | 698 |
| Mechanical fibrillation CNF A | 10 | 0.82 | ○ | 146 |
| Mechanical fibrillation CNF A | 0 | 0.94 | ○ | 46 |
| Mechanical fibrillation CNF A | 0 | 1.66 | ○ | 274 |
| Mechanical fibrillation CNF A | 0 | 2.00 | × | 2396 |
| Mechanical fibrillation CNF A | 0 | 1.30 | ○ | 113 |
| Mechanical fibrillation CNF B | 5 | 1.68 | ○ | 704 |
| Mechanical fibrillation CNF B | 10 | 1.22 | ○ | 278 |
| Mechanical fibrillation CNF B | 15 | 1.10 | ○ | 714 |
| Mechanical fibrillation CNF B | 20 | 0.95 | ○ | 693 |
| Mechanical fibrillation CNF B | 0 | 1.50 | ○ | 1289 |
| Mechanical fibrillation CNF B | 0 | 1.00 | ○ | 238 |
| Mechanical fibrillation CNF B | 0 | 2.00 | × | 1746 |
| Mechanical fibrillation CNF B | 0 | 1.10 | ○ | 687 |

Table 1 shows that in a case where the concentration of the cellulose nanofibers in the aqueous solution in which the cellulose nanofibers are dispersed is 2% by mass, the viscosity of the aqueous solution in which the cellulose nanofibers are dispersed is high even without the addition of the diatomaceous earth, which means that stirring is difficult.

It is clearly known from Table 1 that it is possible to stir the mixed aqueous solution if its viscosity is 1495 mPa·s or less (from Table 1, the concentration of the cellulose nanofibers in this case is 1.34% by mass) and further that it is possible to stir the mixed aqueous solution if the concentration of the cellulose nanofibers is 1.68% by mass or less.

It can thus be said that the concentration of the cellulose nanofibers in the aqueous solution in which the cellulose nanofibers are dispersed needs to be 1.68% or less.

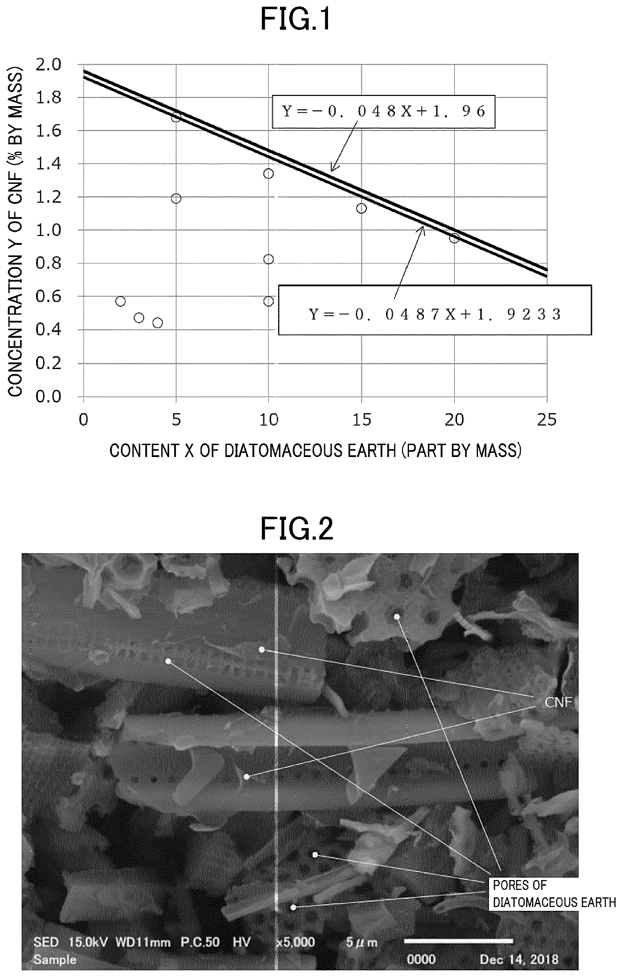

In FIG. 1, a relationship between the content X (parts by mass by mass) of the diatomaceous earth and the concentration Y (% by mass) of the cellulose nanofibers is plotted using the results in Table 1.

As shown in FIG. 1, it was found that the concentration Y of the CNF decreases as the content X of the diatomaceous earth increases, and that the highest concentration Y of the CNF that allows stirring of the aqueous solution in each content X of the diatomaceous earth has a negative linear correlation to the ratio of addition of diatomaceous earth.

It is therefore understood that the relationship of the expression (2) needs to be satisfied between the content X (in parts by mass) of the silicon-based porous material relative to 1 part by mass of the cellulose nanofibers contained in the dispersion liquid and the concentration Y (in % by mass) of the cellulose nanofibers as shown in FIG. 1.

The following expression (3) is preferably satisfied between the content X (parts by mass) of the silicon-based porous material relative to 1 part by mass of the cellulose nanofibers contained in the dispersion liquid and the concentration Y (% by mass) of the cellulose nanofibers. The expression (3) is obtained based on a relationship between the content X (parts by mass) of the diatomaceous earth and the concentration Y (% by mass) of the cellulose nanofibers shown in Table 1 and FIG. 1 (specifically, relationships at two points: when X is 5 (X=5) and Y is 1.68 (Y= 1.68) and when X is 20 (X=20) and Y is 0.95 (Y= 0.95)).
[Math. 3]

$$Y \leq -0.0487X + 1.9233 \ (3)$$

Essentially, a hydroxyl group added to the cellulose nanofibers is converted to -O- in water, and a carboxyl group with which the hydroxyl group is substituted by the Tempo-mediated oxidation process is converted to -COO-, which means that the cellulose nanofibers are negatively charged. Thus, preferably, the pH of the aqueous solvent in which the cellulose nanofibers are dispersed is alkaline in order to stabilize the groups and improve dispersibility.

The content ratio of the cellulose nanofibers and the silicon-based porous material in the dispersion liquid is cellulose nanofibers : silicon-based porous material = 1:5 to 1:20 on the mass basis (i.e., the content of the silicon-based porous material is 5 parts by mass to 20 parts by mass relative to 1 part by mass of the cellulose nanofibers). Setting the content ratio to be 1:5 to 1:20 can mitigate a reduction of the amount of cellulose nanofibers taken in the pores (or the amount of the cellulose nanofibers adhering to the surface of the silicon-based porous material) due to a shortage of the silicon-based porous material. It is therefore possible to take in the cellulose nanofibers (or make the cellulose nanofibers adhere) reliably and prevent a reduction, in mixing a composite material in the resin or rubber composition, in the dispersibility of the silicon-based porous material in which the cellulose nanofibers have entered.

In other words, if the content ratio of the cellulose nanofibers is high (i.e., if the content of the silicon-based porous material is less than 5 parts by mass relative to 1 part by mass of the cellulose nanofibers), the ratio of the silicon-based porous material relative to the cellulose nanofibers is small; therefore, aggregates of the cellulose nanofibers may be formed due to the cellulose nanofibers covering most of the surface of the silicon-based porous material. This may result in a reduction in the dispersibility of the silicon-based porous material in which the cellulose nanofibers have entered when composite material is mixed in the resin or rubber composition.

As described above, in the present invention, the content ratio of the cellulose nanofibers and the silicon-based porous material in the dispersion liquid is set to be cellulose nanofibers : silicon-based porous material = 1:5 to 1:20 on the mass basis.

As compared with mechanically fibrillated cellulose nanofibers, cellulose nanofibers obtained by chemical fibrillation have uniform fineness and thus easily enter the pores of the silicon-based porous material. Accordingly, in the present invention, cellulose nanofibers obtained by chemical fibrillation are preferably employed.

Examples of a device for mixing the silicon-based porous material in the aqueous solvent in which the cellulose nanofibers are dispersed include, for example, a beaker or flask and a stirrer bar, and various types of mixers, such as a planetary mixer.

(Drying Step)

Next, the prepared dispersion liquid is dried, and the aqueous solvent as a dispersion medium is removed, to produce a dried material containing the cellulose nanofibers and the silicon-based porous material.

A device for use in this step is not particularly limited, and devices such as a hot air dryer and a vacuum dryer can be employed. Specifically, a hot air dryer manufactured by ESPEC CORP., (Labostar CONVECTION OVEN LC-122), for example, can be employed.

A drying temperature is preferably 80°C to 100°C in order to remove moisture from the mixed aqueous solution of the cellulose nanofibers and the silicon-based porous material and to shorten a drying time. Natural drying may also be employed if the drying time is not restricted.

The drying time is preferably at least half a day to about two days if drying is performed in an atmosphere, for example, of 80°C to 100°C in order to leave no moisture in the dried material.

(Dried Material Grinding Step)

Next, the produced dried material is ground to produce the composite powder of the present invention in which the cellulose nanofibers adhere to the surface of the silicon-based porous material or enter the pores of the silicon-based porous material.

A device for use in this step is not particularly limited, and devices such as a household mill or a mixer or juicer for pulverizing foods can be employed as a small-scale device. For large-scale (mass) production, a large device, a mill, a grinder, or the like can be employed.

A high-pressure wet pulverizer can be used to add the produced composite powder to the resin or the like. In this case, the size of the powder that can be used in this process depends on the diameter of the nozzle configured to generate high pressure. Thus, after the dried material grinding step, the composite powder can be sorted (classified) according to size with a sieve or the like to obtain only the composite powder with a size equal to or smaller than the diameter of the nozzle to be used.

As a method for obtaining the composite powder from the dispersion liquid, a spray drying method can also be employed which can shorten the drying step, the grinding step, and the classifying step. In this spray drying, the drying step and the grinding step may be performed separately or may be performed simultaneously.

According to the above-described method for manufacturing the composite powder of the present invention, the cellulose nanofibers are supported while being inserted in the pores of the silicon-based porous material (or while adhering to the surface of the silicon-based porous material). It is therefore possible to prevent adhering of the powder to a container due to aggregation of the cellulose nanofibers, and possible to obtain the composite powder that can be dispersed uniformly in the resin or rubber composition. As a result, the strength of CFRP, the rubber, and the resin can be increased reliably.

[Examples]

The present invention will now be described based on Examples. The present invention is not limited to these Examples, and various modifications and variations of these Examples can be made without departing from the scope and spirit of the present disclosure.

(Example 1)

<Production of Composite Powder>

First, a composite powder containing cellulose nanofibers and a silicon-based porous material was produced. More specifically, an aqueous solution of cellulose nanofibers in which cellulose nanofibers that had undergone fibrillation through TEMPO-mediated oxidation were dispersed (trade name: RHEOCRYSTA I-2SX manufactured by DKS Co. Ltd., the content of solids of cellulose nanofibers: 2.0% by mass) was diluted with ion-exchanged water so that the content of the cellulose nanofibers would be 1.0% by mass.

If the aqueous solution of cellulose nanofibers becomes acidic, the repulsive force of an electric double layer of cellulose fibers is weakened, and moreover, a hydrogen bonding point is formed between fibrils, which causes aggregation of the cellulose nanofibers and results in gelation. If an aqueous solution of polyvalent metal salt is added, a COONa group introduced in the cellulose nanofibers is substituted with a COOM group (wherein M is a polyvalent metal) by, for example, a TEMPO-mediated oxidation reaction, which results in gelation. In order to prevent these, ammonia water was added as appropriate to make the aqueous solution of cellulose nanofibers in Examples always alkaline.

Subsequently, 9.09 g of diatomaceous earth (trade name: Celpure S-300 manufactured by Sanshin Filter Industry Co., Ltd., the pore diameter of pores: 50 nm to 600 nm) was added to 91 g of the diluted aqueous solution of cellulose nanofibers and continuously stirred for 5 hours to prepare a dispersion liquid (slurry).

The concentration of the cellulose nanofibers in the aqueous solution of cellulose nanofibers, which is 1.0% by mass (i.e., Y=1.0 in the expression (2)), satisfies the relationship of the expression (2) when the content ratio of the cellulose nanofibers and the diatomaceous earth in the aqueous solution in which the cellulose nanofibers are dispersed is cellulose nanofibers : diatomaceous earth = 1:10 (i.e., X=10 in the expression (2)) on the mass basis.

Next, the prepared dispersion liquid was dried, and water as a dispersion medium was removed, to produce a dried material containing the cellulose nanofibers and the silicon-based porous material. More specifically, the prepared dispersion liquid was transferred into a thin stainless-steel dish (tray), which was kept under static conditions in a hot air drying oven of 80°C overnight or longer to remove water as the dispersion medium and produce a plate-shaped dried material.

The produced plate-shaped dried material was ground with a food processor (trade name: powder mill grinder SG-10BJK manufactured by Cuisinart) and classified with a classifier, specifically a sieve (stainless-steel sieve manufactured by SANPO) to collect a powdered composite powder having a particle diameter of 150 μm or less.

<Evaluation of Dispersibility in Organic Solvent>

Next, the dispersibility of the composite powder in an organic solvent was evaluated. More specifically, the produced composite powder was added to a container containing 30 ml of methyl ethyl ketone so that the composite powder would be 0.63% by mass, which was stirred well (i.e., the container was shaken repeatedly in vertical directions for 5 seconds or more) and was kept under static conditions. The state was visually observed at ten seconds, and at one minute, from when the container was placed under static conditions. The case in which no or slight sedimentation of the composite powder was confirmed within the observation time is indicated by O. The case in which sedimentation of the composite powder was confirmed within the observation time is indicated by $\times$. Table 3 shows the results.

<Evaluation of Adhesion Resisting Property>

Next, adhesion resisting property, against the container, of the dried material produced by drying the dispersion liquid and containing the cellulose nanofibers and the silicon-based porous material was evaluated. More specifically, the weight of the stainless-steel dish was measured before the dispersion liquid was transferred into the dish. After the dispersion liquid was dried and the plate-shaped dried material was removed from the stainless-steel dish, the weight of the stainless-steel dish was measured to obtain a difference between the weight of the stainless-steel dish before and after the drying. The difference was regarded as an adhesion amount due to sticking.

The measurements were made using the composite powder (dried material) after the production process which was adjusted to weigh 10 g and a stainless-steel dish having a size of 24.5 cm $\times$ 17.6 cm and an average weight of 160 g in an unused state. The case in which the amount of adhesion (sticking amount) to the container was 0.1 g or less is indicated by $\bigcirc$, and the case in which the amount of adhesion was more than 0.1 g is indicated by $\times$. Table 2 shows the results.

FIG. 2 is a scanning electron microscope (SEM) photograph showing the state of the composite powder of this Example. In the composite powder of this Example, the cellulose nanofibers are supported while being inserted in the pores (pipe-shaped pores) of the diatomaceous earth, as shown in the central portion of the photograph in FIG. 2.

<Elemental Analysis of Composite Powder>

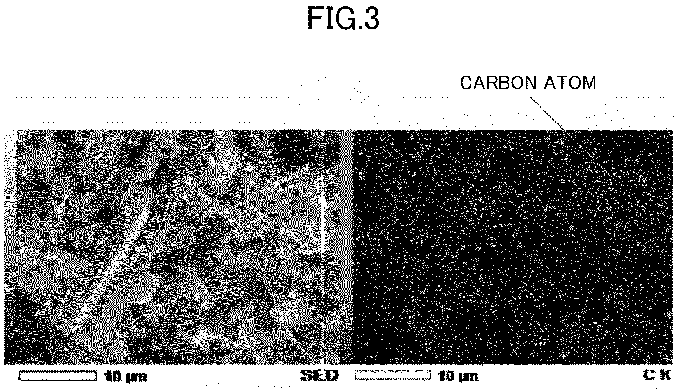

FIG. 3 shows the result of the analysis (analysis of carbon atoms) of the composite powder of this Example by energy-dispersive X-ray spectroscopy (EDS) using a scanning electron microscope (SEM), together with scanning electron microscope (SEM) photographs.

As shown in FIG. 3, there are carbon atoms derived from the cellulose nanofibers (white portions in FIG. 3), which means that there are cellulose nanofibers dispersed in the entire composite powder.

A scanning electron microscope (JSM-IT100 manufactured by JEOL Ltd.) was employed in the SEM observation and EDS analysis.

<Production of Rubber Mixture and Evaluation of Dispersibility in Natural Rubber>

The produced composite powder was mixed into natural rubber at room temperature to produce a rubber mixture. The dispersibility of the composite powder in the natural rubber contained in the produced rubber mixture was evaluated. More specifically, 4 parts by mass of the produced composite powder was added to 100 parts by mass of natural rubber (trade name: SVR-CV60) and mixed at room temperature with a roller having a roll temperature of 60°C, thereby producing a rubber mixture. Subsequently, the dispersibility of the composite powder in the natural rubber contained in the produced rubber mixture was evaluated. More specifically, the composite powder was gradually added to the natural rubber wound around a roll during kneading by the roll, and the dispersion state was visually checked. The case in which no aggregate was visually observed, like a filler, such as silica, which is added for rubber reinforcement and generally not visually observed, is indicated by O. The case in which there was a white granular aggregate clearly left without dispersion in the rubber even by sufficient kneading is indicated by $\times$. Table 2 shows the results.

<Evaluation of Strength>

Next, the rubber hardness (JIS-A method) and tensile tests were conducted on the produced rubber mixture to measure the tensile strength at break. More specifically, the kneaded rubber mixture was formed into a sheet (size: 13 cm $\times$ 20 cm $\times$ 2 mm) using an appropriate crosslinking agent. The sheet was cut with a dumbbell No. 3. A test was performed using a tensile tester (manufactured by Instron) under a condition of a tensile rate of 500 mm/min. The strength at break was regarded as tensile strength.

The grain direction of the rubber due to rolling was considered in calculating the strength: two specimens in the grain direction and two specimens in a direction perpendicular to the grain direction, i.e., four specimens in total, were measured, and a median of measured values was regarded as the strength. The case in which the strength was 20 MPa or more is indicated by O. The case in which the strength was less than 20 MPa is indicated by $\times$. Table 2 shows the results.

(Example 2)

A composite powder and a rubber mixture were produced in the same manner as in Example 1 described above, except that the content ratio of the cellulose nanofibers and the diatomaceous earth in the dispersion liquid was changed to cellulose nanofibers : diatomaceous earth = 1:5 on the mass basis (i.e., X=5 in the expression (2)), and the evaluation of dispersibility in the organic solvent, evaluation of adhesion resisting property, evaluation of dispersibility in the natural rubber, and evaluation of strength were performed. Table 2 shows the results.

(Example 3)

A composite powder and a rubber mixture were produced in the same manner as in Example 1 described above, except that the content ratio of the cellulose nanofibers and the diatomaceous earth in the dispersion liquid was changed to cellulose nanofibers : diatomaceous earth = 1:20 on the mass basis (i.e., X=20 in the expression (1)), and the evaluation of dispersibility in the organic solvent, evaluation of adhesion resisting property, evaluation of dispersibility in the natural rubber, and evaluation of strength were performed. Table 2 shows the results.

(Example 4)

Since diatomaceous earth is a sediment (sedimentary rock) made of fossilized remains of shells of diatoms that is one type of alga, the diatomaceous earth differs depending on where it is from. Taking this into consideration, the presence or absence of effects of the present invention was investigated using diatomaceous earth other than "Celpure S-300" above.

More specifically, a composite powder and a rubber mixture were produced in the same manner as in Example 1 described above, except that diatomaceous earth (trade name: diatomaceous earth manufactured by FUJIFILM Wako Pure Chemical Corporation) was employed instead of the diatomaceous earth (trade name: Celpure S-300 manufactured by Sanshin Filter Industry Co., Ltd.), and the evaluation of dispersibility in the organic solvent, evaluation of adhesion resisting property, evaluation of dispersibility in the natural rubber, and evaluation of strength were performed. Table 2 shows the results.

(Example 5)

Diatomaceous earth different from the diatomaceous earth in Example 4 was also investigated. More specifically, a composite powder and a rubber mixture were produced in the same manner as in Example 1 described above, except that diatomaceous earth (trade name: diatomaceous earth manufactured by MP Biomedicals, Inc.) was employed instead of the diatomaceous earth (trade name: Celpure S-300 manufactured by Sanshin Filter Industry Co., Ltd.), and the evaluation of dispersibility in the organic solvent, evaluation of adhesion resisting property, evaluation of dispersibility in the natural rubber, and evaluation of strength were performed. Table 2 shows the results.

(Example 6)

A composite powder and a rubber mixture were produced in the same manner as in Example 1 described above, except that zeolite (trade name: Zeolum A-4 manufactured by Tosoh Corporation) was employed instead of the diatomaceous earth (trade name: Celpure S-300 manufactured by Sanshin Filter Industry Co., Ltd.), and the evaluation of dispersibility in the organic solvent, evaluation of adhesion resisting property, evaluation of dispersibility in the natural rubber, and evaluation of strength were performed. Table 2 shows the results.

(Example 7)

A composite powder and a rubber mixture were produced in the same manner as in Example 1 described above, except that zeolite (trade name: Zeolum F-9 manufactured by Tosoh Corporation) was employed instead of the diatomaceous earth (trade name: Celpure S-300 manufactured by Sanshin Filter Industry Co., Ltd.), and the evaluation of dispersibility in the organic solvent, evaluation of adhesion resisting property, evaluation of dispersibility in the natural rubber, and evaluation of strength were performed. Table 2 shows the results.

(Example 8)

A composite powder and a rubber mixture were produced in the same manner as in Example 1 described above, except that an aqueous solution of cellulose nanofibers in which cellulose nanofibers that had undergone mechanical fibrillation were dispersed (trade name: BiNFi-s AFo-10002 (standard fiber length) manufactured by Sugino Machine Limited, the content of solids of cellulose nanofibers: 2.0% by mass) was employed instead of the aqueous solution of cellulose nanofibers in which cellulose nanofibers that had undergone fibrillation through TEMPO-mediated oxidation were dispersed, and the evaluation of dispersibility in the organic solvent, evaluation of adhesion resisting property, evaluation of dispersibility in the natural rubber, and evaluation of strength were performed. Table 2 shows the results.

(Example 9)

A composite powder and a rubber mixture were produced in the same manner as in Example 1 described above, except that an aqueous solution of cellulose nanofibers in which cellulose nanofibers that had undergone mechanical fibrillation were dispersed (trade name: CELISH manufactured by Daicel Corporation, the content of solids of cellulose nanofibers: 10.4% by mass) was employed instead of the aqueous solution of cellulose nanofibers in which cellulose nanofibers that had undergone fibrillation through TEMPO-mediated oxidation were dispersed, and the evaluation of dispersibility in the organic solvent, evaluation of adhesion resisting property, evaluation of dispersibility in the natural rubber, and evaluation of strength were performed. Table 2 shows the results.

(Comparative Example 1)

A composite powder and a rubber mixture were produced in the same manner as in Example 1 described above, except that the content ratio of the cellulose nanofibers and the diatomaceous earth in the dispersion liquid was changed to cellulose nanofibers : diatomaceous earth = 1:4 on the mass basis (i.e., X=4 in the expression (2)), and the evaluation of dispersibility in the organic solvent, evaluation of adhesion resisting property, evaluation of dispersibility in the natural rubber, and evaluation of strength were performed. Table 3 shows the results.

(Comparative Example 2)

A composite powder and a rubber mixture were produced in the same manner as in Example 1 described above, except that the content ratio of the cellulose nanofibers and the diatomaceous earth in the dispersion liquid was changed to cellulose nanofibers : diatomaceous earth = 1:3 on the mass basis (i.e., X=3 in the expression (2)), and the evaluation of dispersibility in the organic solvent, evaluation of adhesion resisting property, evaluation of dispersibility in the natural rubber, and evaluation of strength were performed. Table 3 shows the results.

(Comparative Example 3)

A composite powder and a rubber mixture were produced in the same manner as in Example 1 described above, except that the content ratio of the cellulose nanofibers and the diatomaceous earth in the dispersion liquid was changed to cellulose nanofibers : diatomaceous earth = 1:2 on the mass basis (i.e., X=2 in the expression (2)), and the evaluation of dispersibility in the organic solvent, evaluation of adhesion resisting property, evaluation of dispersibility in the natural rubber, and evaluation of strength were performed. Table 3 shows the results.

(Comparative Example 4)

A composite powder and a rubber mixture were produced in the same manner as in Example 1 described above, except that silica that is not porous (trade name: Nipsil VN3 manufactured by Tosoh Corporation) was employed instead of the diatomaceous earth as a silicon-based porous material, and the evaluation of dispersibility in the organic solvent, evaluation of adhesion resisting property, evaluation of dispersibility in the natural rubber, and evaluation of strength were performed. Table 3 shows the results.

(Comparative Example 5)

A composite powder and a rubber mixture were produced in the same manner as in Example 1 described above, except that diatomaceous earth was not employed, and the evaluation of dispersibility in the organic solvent, evaluation of adhesion resisting property, evaluation of dispersibility in the natural rubber, and evaluation of strength were performed. Table 3 shows the results.

Table 2

| | | Example 1 | Example 2 | Example 3 | Example 4 | Example 5 | Example 6 | Example 7 | Example 8 | Example 9 |
|---|---|---|---|---|---|---|---|---|---|---|
| Mixing ratio of CNF (solids) and silicon-based porous material | Tempo-oxidation fibrillation CNF (RHEOCRYSTA) | 1 | 1 | 1 | 1 | 1 | 1 | 1 | - | - |
| | Mechanical fibrillation CNF (BINFi-s) | - | - | - | - | - | - | - | 1 | - |
| | Mechanical fibrillation CNF (CELISH) | - | - | - | - | - | - | - | - | 1 |
| | Diatomaceous earth (Celpure S-300) | 10 | 5 | 20 | - | - | - | - | 10 | 10 |
| | Diatomaceous earth (manufactured by FUJIFILM Wako Pure Chemical Corporation) | - | - | - | 10 | - | - | - | - | - |
| | Diatomaceous earth (manufactured by MP Biomedicals, Inc.) | - | - | - | - | 10 | - | - | - | - |
| | Zeolite (Zeolum A-4) | - | - | - | - | - | 10 | - | - | - |
| | Zeolite (Zeolum F-9) | - | - | - | - | - | - | 10 | - | - |
| | Silica (Nipsil VN3) | - | - | - | - | - | - | - | - | - |
| Evaluation | Adhesion amount [g] | 0.06 | 0.00 | 0.00 | 0.00 | 0.01 | 0.00 | 0.00 | 0.02 | 0.09 |
| | Adhesion resisting property | ○ | ○ | ○ | ○ | ○ | ○ | ○ | ○ | ○ |
| | Dispersibility in organic solvent | ○ | ○ | ○ | ○ | ○ | ○ | ○ | ○ | ○ |
| | Dispersibility in natural rubber | ○ | ○ | ○ | ○ | ○ | ○ | ○ | ○ | ○ |
| | Hardness according to JIS-A method | 41 | 41 | 44 | 41 | 42 | 41 | 43 | 43 | 44 |
| | Tensile strength at break [Mpa] | 20.1 | 20.1 | 21.0 | 20.2 | 20.4 | 20.2 | 21.0 | 21.1 | 21.1 |
| | Strength | ○ | ○ | ○ | ○ | ○ | ○ | ○ | ○ | ○ |

EP 4 306 574 B1

Table 3

| | | Comparative Example 1 | Comparative Example 2 | Comparative Example 3 | Comparative Example 4 | Comparative Example 5 |
|---|---|---|---|---|---|---|
| Mixing ratio of CNF (solids) and silicon-based porous material | Tempo-oxidation fibrillation CNF (RHEOCRYSTA) | 1 | 1 | 1 | 1 | 1 |
| | Mechanical fibrillation CNF (BiNFi-s) | - | - | - | - | - |
| | Mechanical fibrillation CNF (CEL-ISH) | - | - | - | - | - |
| | Diatomaceous earth (Celpure S-300) | 4 | 3 | 2 | - | - |
| | Diatomaceous earth (manufactured by FUJIFILM Wako Pure Chemical Corporation) | - | - | - | | - |
| | Diatomaceous earth (manufactured by MP Biomedicals, Inc.) | - | - | - | - | - |
| | Zeolite (Zeolum A-4) | - | - | - | - | - |
| | Zeolite (Zeolum F-9) | - | - | - | - | - |
| | Silica (Nipsil VN3) | - | - | - | 10 | - |
| Evaluation | Adhesion amount [g] | 0.22 | 0.03 | 0.07 | 0.16 | 0.38 |
| | Adhesion resisting property | × | ○ | ○ | × | × |
| | Dispersibility in organic solvent | ○ | ○ | × | × | × |
| | Dispersibility in natural rubber | × | × | × | × | × |
| | Hardness according to JIS-A method | 43 | 42 | 42 | 40 | 45 |
| | Tensile strength at break [Mpa] | 19.8 | 17.9 | 16.0 | 18.9 | 13.4 |
| | Strength | × | × | × | × | × |

In the composite powders of Examples 1 to 9, the content ratio of the cellulose nanofibers and the silicon-based porous material in the dispersion liquid is cellulose nanofibers : silicon-based porous material = 1:5 to 1:20 on the mass basis (i.e., the content of the silicon-based porous material is 5 parts by mass to 20 parts by mass relative to 1 part by mass of the cellulose nanofibers). As shown in Table 2, this configuration causes the cellulose nanofibers to enter pores of the silicon-based porous material (or to adhere to the surface of the silicon-based porous material), and mitigates a reduction of the amount of cellulose nanofibers taken in the pores (or the amount of the cellulose nanofibers adhering to the surface of the silicon-based porous material) due to a shortage of the silicon-based porous material, thereby making it possible to prevent generation of aggregates of cellulose nanofibers on the surface of the silicon-based porous material. It is thus possible to disperse the cellulose nanofibers uniformly in the natural rubber in the rubber mixture and, as a result, increase the strength of the rubber mixture reliably.

As shown in Table 2, the composite powders of Examples 1 to 9 have good dispersibility in the organic solvent (methyl ethyl ketone) and good compatibility with the organic solvent, as well, due to the cellulose nanofibers inserted in the pores of the silicon-based porous material (or adhering to the surface of the silicon-based porous material).

INDUSTRIAL APPLICABILITY

As can be seen from the foregoing description, the present invention is suitable for a composite powder for use in rubber, resin, or carbon fiber-reinforced plastic and a method for manufacturing the composite powder.

**Claims**

1. A method for manufacturing a composite powder containing cellulose nanofibers and a silicon-based porous material, the method comprising:

    preparing a dispersion liquid by mixing the silicon-based porous material into an aqueous solvent in which the cellulose nanofibers are dispersed;
    producing a dried material containing the cellulose nanofibers and the silicon-based porous material by drying the dispersion liquid; and
    producing a composite powder by grinding the dried material,
    wherein
    the silicon-based porous material contains at least one of diatomaceous earth or zeolite, a content ratio of the cellulose nanofibers and the silicon-based porous material in the dispersion liquid is cellulose nanofibers : silicon-based porous material = 1:5 to 1:20 on a mass basis, and
    a relationship of the following expression (1) is satisfied,
    [Math. 1]

$$Y \leq -0.048X + 1.96 \ (1)$$

    where X (in parts by mass) is a content of the silicon-based porous material relative to 1 part by mass of the cellulose nanofibers contained in the dispersion liquid and Y (in % by mass) is a concentration of the cellulose nanofibers in the aqueous solvent.

2. The method of claim **1,** wherein the cellulose nanofibers are obtained by chemical fibrillation.

3. The method of claim 1 or 2, wherein the aqueous solvent has a pH of 10 to 12.

4. A composite powder containing cellulose nanofibers and a silicon-based porous material, wherein

    the silicon-based porous material contains zeolite,
    a content ratio of the cellulose nanofibers and the silicon-based porous material is cellulose nanofibers : silicon-based porous material = 1:5 to 1:20 on a mass basis, and
    the cellulose nanofibers at least adhere to a surface of the silicon-based porous material or are inserted in pores of the silicon-based porous material.

**Patentansprüche**

1. Verfahren zur Herstellung eines Cellulose-Nanofasern und ein poröses Material auf Silicium-Basis enthaltenden Verbundpulvers, umfassend:

    Herstellen einer Dispersionsflüssigkeit durch Mischen des porösen Materials auf Silicium-Basis in ein wässriges Lösungsmittel, in dem die Cellulose-Nanofasern dispergiert sind;
Herstellen eines die Cellulose-Nanofasern und das poröse Material auf Silicium-Basis enthaltenden getrockneten Materials durch Trocknen der Dispersionsflüssigkeit; und
Herstellen eines Verbundpulvers durch Mahlen des getrockneten Materials,
wobei
das poröse Material auf Silicium-Basis Kieselgur und/oder Zeolith enthält, ein Verhältnis des Anteils der Cellulose-Nanofasern und des porösen Materials auf Silicium-Basis in der Dispersionsflüssigkeit bezogen auf die Masse Cellulose-Nanofasern : poröses Material auf Silicium-Basis = 1 : 5 bis 1 : 20 beträgt und
ein Verhältnis des folgenden Ausdrucks (1) erfüllt ist:
[Math. 1]

$$Y \leq -0,048\,X + 1,96\ (1),$$

wobei X (in Massenteilen) für einen Anteil des porösen Materials auf Silicium-Basis bezogen auf 1 Massenteil der in der Dispersionsflüssigkeit enthaltenen Cellulose-Nanofasern steht und Y (in Massenprozent) für eine Konzentration der Cellulose-Nanofasern in dem wässrigen Lösungsmittel steht.

2. Verfahren nach Anspruch 1, wobei die Cellulose-Nanofasern nach einem chemischen Fibrillationsverfahren hergestellt werden.

3. Verfahren nach Anspruch 1 oder 2, wobei das wässrige Lösungsmittel einen pH-Wert von 10 bis 12 aufweist.

4. Verbundpulver, enthaltend Cellulose-Nanofasern und ein poröses Material auf Silicium-Basis, wobei

das poröse Material auf Silicium-Basis Zeolith enthält,
ein Verhältnis des Anteils der Cellulose-Nanofasern und des porösen Materials auf Silicium-Basis bezogen auf die Masse Cellulose-Nanofasern : poröses Material auf Silicium-Basis = 1 : 5 bis 1 : 20 beträgt und
die Cellulose-Nanofasern zumindest an einer Oberfläche des porösen Materials auf Silicium-Basis haften oder in Poren des porösen Materials auf Silicium-Basis aufgenommen sind.

## Revendications

1. Procédé de fabrication d'une poudre composite contenant des nanofibres de cellulose et une matière poreuse à base de silicium, le procédé comprenant les étapes consistant à :

préparer un liquide de dispersion en mélangeant la matière poreuse à base de silicium dans un solvant aqueux dans lequel les nanofibres de cellulose sont dispersées ;
produire une matière séchée contenant les nanofibres de cellulose et la matière poreuse à base de silicium en séchant le liquide de dispersion ; et
produire une poudre composite en pulvérisant la matière séchée,
dans lequel
la matière poreuse à base de silicium contient au moins une parmi la terre à diatomées ou la zéolithe, un rapport des teneurs en nanofibres de cellulose et en matière poreuse à base de silicium dans le liquide de dispersion est nanofibres de cellulose : matière poreuse à base de silicium = 1 : 5 à 1 : 20 en masse, et
une relation de l'expression (1) suivante est satisfaite :
[Math. 1]

$$Y \leq -0,048\,X + 1,96\ (1),$$

dans laquelle X (en parties en masse) est une teneur en matière poreuse à base de silicium par rapport à 1 partie en masse des nanofibres de cellulose contenues dans le liquide de dispersion, et Y (en % en masse) est une concentration des nanofibres de cellulose dans le solvant aqueux.

2. Procédé selon la revendication 1, dans lequel les nanofibres de cellulose sont obtenues par fibrillation chimique.

3. Procédé selon la revendication 1 ou 2, dans lequel le solvant aqueux a un pH de 10 à 12.

4. Poudre composite contenant des nanofibres de cellulose et une matière poreuse à base de silicium, dans laquelle

la matière poreuse à base de silicium contient de la zéolithe,
un rapport des teneurs en nanofibres de cellulose et en matière poreuse à base de silicium est nanofibres de cellulose : matière poreuse à base de silicium = 1 : 5 à 1 : 20 en masse, et
les nanofibres de cellulose adhèrent au moins à une surface de la matière poreuse à base de silicium ou sont insérées dans des pores de la matière poreuse à base de silicium.

# FIG.1

$Y = -0.048X + 1.96$

$Y = -0.0487X + 1.9233$

# FIG.2

# FIG.3

CARBON ATOM

10 µm    SED    10 µm    C K

**EP 4 306 574 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019026782 A
- EP 3663363 A
- EP 4212242 A1